(19) Europäisches Patentamt
European Patent Office
Office européen des brevets

(11) Publication number: 0 398 125 A1

# (12) EUROPEAN PATENT APPLICATION

(21) Application number: 90108608.2

(22) Date of filing: 08.05.90

(51) Int. Cl.5: C08G 18/62, C08G 18/61, C08G 18/28, C08J 9/00, C09K 3/10, //(C08G18/62, 101:00)

(30) Priority: 15.05.89 JP 118572/89

(43) Date of publication of application: 22.11.90 Bulletin 90/47

(84) Designated Contracting States: DE FR GB

(71) Applicant: Bridgestone Corporation
10-1, Kyobashi 1-Chome Chuo-Ku
Tokyo 104(JP)

(72) Inventor: Ako, Masayuki
1-22-7-402 Ichikawa
Ichikawa City, Chiba Prefecture(JP)
Inventor: Sawa, Eiji
150-7 Kashiocho, Totsuka-Ku
Yokohama City, Kanagawa Prefecture(JP)
Inventor: Fukuda, Hiroya
1765-30 Totsukacho, Totsuka-Ku
Yokohama City, Kanagawa Prefecture(JP)
Inventor: Ohashi, Takashi
710-3-403 Kamiyabecho, Totsuka-Ku
Yokohama City, Kanagawa Prefecture(JP)

(74) Representative: Reinhard, Skuhra, Weise
Friedrichstrasse 31
D-8000 München 40(DE)

## (54) A method of making a polyurethane-foam sealant having saturated hydrocarbon-resin skeleton.

(57) A polyurethane-foam sealant having a saturated hydrocarbon-resin skeleton and excellent in the stopping ability of water leakage can be made by reacting a polyol having a saturated hydrocarbon-resin skeleton, an organic isocyanate and a blowing agent in the presence of a reactive silicone-oil having hydroxyl group.

EP 0 398 125 A1

## A method of making a polyurethane-foam sealant having saturated hydrocarbon-resin skeleton

### FIELD OF THE INVENTION

The present invention relates to a polyurethane-foam sealant having a saturated hydrocarbon-resin skeleton which is superior in stopping of water leakage.

### DESCRIPTION OF THE PRIOR ART

Those known as foam-type sealants for stopping of water leakage are polyether type or polyester type polyurethane-foams impregnated and adhered with water-repelling substances like asphalt, foams obtained by a foaming reaction of polybutadiene-polyol with an organic isocyanate, and foams obtained by a foaming reaction of a polyol modified by castor oil or a dimer acid with an organic isocyanate.

Although stopping ability of water leakage by these conventional products is good, the polyurethane-foam impregnated with asphalt exhibits the emaciation (hardening) of asphalt in the course of time to result in the degeneration of the ability, and the foams of the polybutadiene-polyol type or foams of the castor oil or the dimer acid modified polyol type have double bonds in their molecular structures to result in their inferior resistance to weathering.

The present inventors made study for overcoming these defects of the prior arts, and proposed previously in Japanese Patent Public Disclosure TOKKAI Sho 63-27583 (1988) a polyurethane-foam sealant having a saturated hydrocarbon-resin skeleton prepared by reacting a polyolefin-polyol, an organic isocyanate and water as a blowing agent.

Since the sealant is a polyurethane-foam employing the polyol component having a saturated hydrocarbon-resin skeleton, the resultant resin skeleton of the foam has water-repulsion property to exhibit favorable stopping ability of water leakage.

Further, such defects as the emaciation in the course of time as the asphalt-impregnated foam and the inferior antiweatherability as foams of the polybutadiene-polyol type or the castor oil or the dimer acid modified polyol type are obviated.

### SUMMARY OF THE INVENTION

It is an object of the present invention to improve the technology in the above-mentioned Japanese Patent Public Disclosure TOKKAI Sho 63-27583, and to provide a sealant superior further in the stopping ability of water leakage.

### DETAILED DESCRIPTION OF THE PREFERRED EMBODIMENTS

The method of making a polyurethane-foam sealant having a saturated hydrocarbon-resin skeleton comprises, reacting a polyol having a saturated hydrocarbon-resin skeleton, an organic isocyanate and a blowing agent in the presence of a reactive silicone-oil having hydroxyl group as a surfactant.

Surfactants employed hitherto generally for the production of polyurethane-foam are terminally capped organic silicon compounds, and they are strongly hydrophilic due to the surface-active effect of the compounds themselves.

Accordingly, from the view point of the water repulsion property of the foam, the conventional organic silicon compound existing in the foam is reasoned to affect unfavorably.

Contrary to the above, when a reactive silicone-oil having hydroxyl group is employed, the surface-active effect of the silicone-oil disappears by a reaction with the isocyanate component during the foaming reaction, while water repulsion property of the foam due to the saturated hydrocarbon-resin skeleton is retained to result in the increase of the stopping ability of water leakage further.

As to the reactive silicone-oil having hydroxyl (OH) group, compounds having at least one hydroxyl

group at principal chain or side chain are as exemplified by the following formulas.

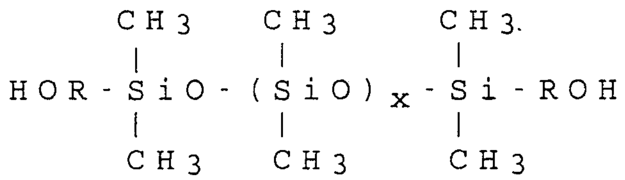

(I)

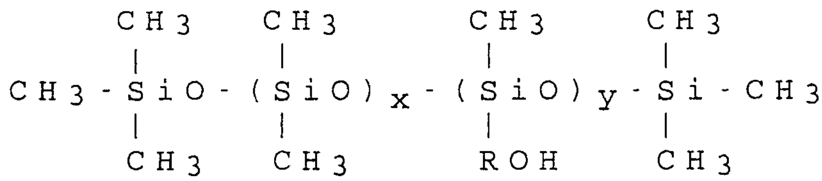

(II)

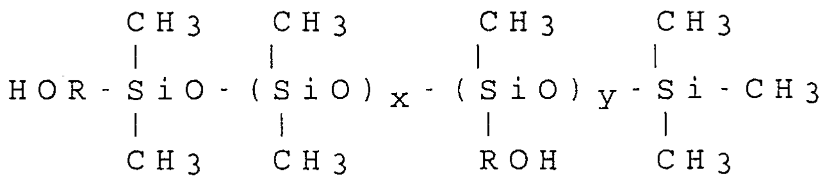

(III)

These reactive silicone-oils having at least one hydroxyl group at the principal chain or the side chain can be prepared by conversion of silicone-oils with alcohols.

As to the polyols having saturated hydrocarbon-resin skeletons usable for the present invention, hydrogenated polyisoprene or polybutadiene having at least two hydroxyl groups in the molecule and number-average molecular weight of 1,000-5,000, especially of 2,000-3,000, are preferred.

As to the organic isocyanates, tolylenediisocyanate, diphenylmethanediisocyanate, xylylenediisocyanate, polymethylene-polyphenylene-polyisocyanate, hexamethylenediisocyanate, isophoronediisocyanate, etc. are mentioned. As to the blowing agent to be employed for the foaming reaction of these raw materials, water or volatile organic blowing agents such as monofluorotrichloromethane can be used.

For the catalyst, amine-type catalysts or tin-type catalysts being used generally for the production of polyurethane-foams are usable as they are. Other than materials mentioned above, such other usual materials employed for production of polyurethane-foams such as crosslinking agents, fillers as calcium carbonate, etc., antioxidants and U.V. absorbers are usable.

To prepare the polyurethane-foam with these materials, either of a method of mixing simultaneously the polyol having saturated hydrocarbon-resin skeleton, organic isocyanate, water, catalyst, surfactant, etc. (one-shot method), or a method of preparing an isocyanate-terminated prepolymer by reacting a part of the polyol having saturated hydrocarbon-resin skeleton with an excess amount of organic isocyanate in terms of equivalent value first then react with the remaining other raw materials (prepolymer method) may be employed. In consideration of stability during the formation of foams, the prepolymer method is preferred.

Polyurethane-foams having saturated hydrocarbon-resin skeleton thus obtained have been found to exhibit a higher ability of stopping water leakage due to the hydrophobic property of the resin skeleton itself and to the lowered surface-active effect of the organic silicone compound used as a surfactant because of its fixation into the foam by its reaction with the organic isocyanate.

The foam density can be adjusted with the amount of water or a volatile organic blowing agent added. The amount of water is preferably 0.5.3.0% by weight per 100% by weight of the polyol having saturated hydrocarbon resin skeleton. When the amount of water is not more than 0.5% by weight, the foam density becomes unfavorably high, and when it is over 3.0% by weight, normal foams are hardly obtainable because of the instability of foams during the foaming reaction.

[Example 1]

As the polyol having saturated hydrocarbon resin skeleton, 100 parts by weight of hydroxyl group

terminated hydrogenated polyisoprene (code name: PIPH, molecular weight: 2500, number of functional group: 2.3) from Idemitsu Petrochemical Co. were used, and were mixed under agitation and heating (70 °C, 14 hrs.) with 31 parts by weight of organic isocyanate SUMIDULE T-80 ® from Sumitomo-Bayer Urethane Co. to obtain an isocyanate terminated prepolymer having NCO% = 8.3%. 100 parts by weight of thus obtained prepolymer were mixed, in accordance with the formulation (weight ratio) mentioned in Table 1, with a blowing agent of water, a diluting agent of methylenechloride and polybutene (molecular weight: 350) from Idemitsu Petrochemical Co., a crosslinking agent of triethanolamine, a catalyst (Sankyo Airproduct Co.,DABCO 33 LV ®; 33% dipropyleneglycol solution of triethylenediamine) and a surfactant of a reactive organic silicone-oil having alcohol-modified hydroxyl group (code name: SF-8427; Toray Silicone Co.; mentioned below);

$$\begin{array}{ccccccc} & CH_3 & & CH_3 & & CH_3 & \\ & | & & | & & | & \\ HOR- & SiO & -( & SiO & )_x- & Si & -ROH \\ & | & & | & & | & \\ & CH_3 & & CH_3 & & CH_3 & \end{array} \qquad (\text{OH equivalent; } 1{,}200)$$

to cause forming reaction to obtain a polyurethane-foam having saturated hydrocarbon-resin skeleton. The density of thus obtained foam was 0.050g/cm$^3$.

A sheet of 1cm thickness from the foam was punched in U shape (1cm width), and was placed between two acryl boards and subjected to 70% compression. Water was charged in the U shape, and the test of stopping water leakage was conducted under conditions of water. pressure 5g/cm$^2$ (50 mm water column). The foam stopped water leakage for over 24 hours.

[Comparative Example 1]

The polyol, the isocyanate, the blowing agent and the catalyst identical with those of Example 1 were used, and as the surfactant was employed a terminally-capped organic silicone oil usually used for soft foams. The silicone oil was SRX-294A (non-reactive type; Toray Silicone Co.). The obtained polyurethane-foam having saturated hydrocarbon-resin skeleton had a density of 0.055 g/cm$^3$. Stopping of water leakage by the foam was tested similarly to Example 1, and water leaked after stopping for 1 hour and 30 minutes.

Table 1

| | Example 1 | Comparative Example 1 | Example 2 | Comparative Example 2 |
|---|---|---|---|---|
| Composition | | | | |
| Prepolymer | 100 | 100 | 100 | 100 |
| Methylenechloride | 10 | 10 | 10 | 10 |
| Polybutene | 10 | 10 | | |
| Water | 1.2 | 1.2 | 1.2 | 1.2 |
| Glycerol | | | 1.5 | 1.5 |
| Triethanolamine | 1.5 | 1.5 | | |
| DABCO 33LV | 1.5 | 1.5 | 2.5 | 2.5 |
| Silicone SF-8427 | 0.4 | | 0.4 | |
| Silicone SRX-294A | | 0.5 | | 0.4 |
| Property | | | | |
| Density (g/cm$^3$) | 0.050 | 0.055 | 0.052 | 0.044 |
| Tensile Strength (kg/cm$^2$) | 1.24 | 0.93 | 1.26 | 0.76 |
| Elongation (%) | 230 | 240 | 130 | 160 |
| Stopping of Water leakage | over 24 hrs. | 1.5 hrs. | over 24 hrs. | 1.5 hrs. |

[Example 2]

As the polyol having saturated hydrocarbon-resin skeleton, 100 parts by weight of hydroxyl group terminated hydrogenated polybutadiene (POLYTHEL HA ®, molecular weight: 2,000, number of functional group: 2) from Mitsubishi Chemical Co. were used, and were mixed under agitation and heating (70 °C, 14 hours) with 30 parts by weight of organic isocyanate SUMIDULE T-80 ® from Sumitomo-Bayer Urethane Co. to obtain an isocyanate-terminated prepolymer having NCO% = 8.0%. 100 parts by weight of thus obtained prepolymer were mixed, in accordance with the formulation (weight ratio) mentioned in Table 1, with a blowing agent of water, a viscosity-lowering agent of methylenechloride, a crosslinking agent of glycerol, a catalyst (Sankyo Airproduct Co,: DABCO 33LV) and a surfactant of the same with Example 1 (SF-8427; Toray Silicone Co.) was added and mixed to cause foaming reaction to obtain a polyurethane-foam having saturated hydrocarbon-resin skeleton. The density of thus obtained foam was 0.052g/$cm^3$. Stopping of water leakage by the foam was tested similarly to Example 1, and the foam stopped water leakage for over 24 hours.

[Comparative Example 2]

The polyol, the isocyanate, the blowing agent and the catalyst identical with those of Example 2 were used, and as the surfactant was employed the same one with Comparative Example 1 of SRX-294A (Toray Silicone Co.). The obtained polyurethane foam having saturated hydrocarbon-resin skeleton had a density of 0.044g/$cm^3$. Stopping of water leakage for the foam was tested similarly to Example 1, and water leaked after stopping for 1 hour and 40 minutes.

## Claims

1. In a method of making a polyurethane-foam sealant having a saturated hydrocarbon resin skeleton comprising a foaming reaction of a polyol having a saturated hydrocarbon-resin skeleton, an organic isocyanate and a blowing agent, the improvement comprises undertaking the reaction in the presence of a reactive silicone-oil having hydroxyl group as a surfactant.

2. The method according to claim 1, wherein said polyol is hydrogenated polyisoprene or polybutadiene having at least two hydroxyl groups in the molecule.

3. The method according to claim 1, wherein the blowing agent is water.

European Patent Office

# EUROPEAN SEARCH REPORT

Application Number

EP 90 10 8608

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DATABASE WPIL, no. 88-073963, Derwent Publications Ltd, London, GB; & JP-A-63 027 583 (BRIDGESTONE) 05-02-1988 (Cat. D)<br>* Abstract *<br>--- | 1-3 | C 08 G 18/62<br>C 08 G 18/61<br>C 08 G 18/28<br>C 08 J 9/00<br>C 09 K 3/10 //<br>(C 08 G 18/62<br>C 08 G 101:00 ) |
| Y | DATABASE WPI, no. 80-66992C, Derwent Publications Ltd, London, GB; & JP-A-55 104 330 (NHK SPRING K.K.) 10-08-1980<br>* Abstract *<br>--- | 1-3 | |
| A | US-A-4 412 013 (Y.F. CHANG)<br>* Claims 1-3; column 3, lines 23-46; column 9, lines 3-14 *<br>--- | 1 | |
| A | US-A-3 629 172 (F.B. JONES)<br>* Abstract; column 2, lines 9-22; column 2, line 64 - column 3, line 47; column 9, lines 27-63 *<br>----- | 1 | **TECHNICAL FIELDS SEARCHED (Int. Cl.5)**<br>C 08 G<br>C 08 J<br>C 09 K |

The present search report has been drawn up for all claims

| Place of search | Date of completion of the search | Examiner |
|---|---|---|
| THE HAGUE | 21-08-1990 | VAN PUYMBROECK M.A. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)